(19) **Europäisches Patentamt / European Patent Office / Office européen des brevets**

(11) **EP 4 166 994 B1**

(12) **EUROPEAN PATENT SPECIFICATION**

(45) Date of publication and mention
of the grant of the patent:
**24.07.2024 Bulletin 2024/30**

(21) Application number: **22197414.0**

(22) Date of filing: **23.09.2022**

(51) International Patent Classification (IPC):
**G01V 8/20** (2006.01)

(52) Cooperative Patent Classification (CPC):
**G01V 8/20**

(54) **SENSOR FOR PROVIDING A SURVEILLANCE AREA**

SENSOR ZUM ÜBERWACHEN EINES BEREICHS

CAPTEUR POUR LA SURVEILLANCE D'UN ESPACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2021 EP 21203157**

(43) Date of publication of application:
**19.04.2023 Bulletin 2023/16**

(73) Proprietor: **Pepperl+Fuchs SE
68307 Mannheim (DE)**

(72) Inventor: **ASGHAR, Sayed Zeeshan
12277 Berlin (DE)**

(74) Representative: **Fischer, Uwe
Patentanwalt
Moritzstraße 22
13597 Berlin (DE)**

(56) References cited:
**DE-U1- 202012 105 043     US-A1- 2009 016 735**

• **LINDENFELD MICHAEL J: "Mismatched Filters
for Incoherent Pulse Compression in Laser
Radar", IEEE TRANSACTIONS ON AEROSPACE
AND ELECTRONIC SYSTEMS, IEEE SERVICE
CENTER, PISCATAWAY, NJ, US, vol. 57, no. 2, 16
November 2020 (2020-11-16), pages 1252 - 1260,
XP011848616, ISSN: 0018-9251, [retrieved on
20210409], DOI: 10.1109/TAES.2020.3038256**
• **ALZUHIRI MOHAND ET AL: "Enhanced pulsed
thermoacoustic imaging by noncoherent pulse
compression", JOURNAL OF APPLIED PHYSICS,
AMERICAN INSTITUTE OF PHYSICS, 2
HUNTINGTON QUADRANGLE, MELVILLE, NY
11747, vol. 130, no. 17, 4 November 2021
(2021-11-04), XP012260943, ISSN: 0021-8979,
[retrieved on 20211104], DOI: 10.1063/5.0062148**

EP 4 166 994 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Background of the invention

A sensor comprising a plurality of radiation emitters for generating a light curtain is described for instance in Chinese Patent Application CN 203877712 U.

A sensor comprising the features according to the preamble of claim 1 is disclosed in "Mismatched Filters for Incoherent Pulse Compression in Laser Radar" (Michael J Lindenfeld; IEEE TRANSACTIONS ON AEROSPACE AND ELECTRONIC SYSTEMS, 20201116 IEEE SERVICE CENTER, PISCATAWAY, NJ, US - ISSN 0018-9251).

The accuracy of surveillance channels of sensors such as light curtain devices may be impaired by interference of ambient light or radiation from other sources. For instance, if an object interrupts one of the surveillance channels and should therefore be detected, but the corresponding detector of the surveillance channel is illuminated by ambient light or light of another source, the object may remain undetected.

Objective of the present invention

An objective of the present invention is to propose a sensor and a light curtain device which are optimized with regard to above described interference problems.

A further objective of the present invention is to provide an improved method of fabricating such a sensor.

Brief summary of the invention

An embodiment of the present invention relates to a sensor according to claim 1.

An advantage of the above exemplary embodiment is that the correlation analysis is capable of reliably indicating interference problems even in case of a relatively short first code. The first code can also be referred to as "transmission" code because it is used for coding before transmitting the data. For instance, if the signal path between the first radiation emitter and the first detector is interrupted, the sensor should detect this situation. However, in case of severe interference, radiation from other sources such as ambient light might lead to a detection signal of the first detector nonetheless. In this latter scenario, an object that interrupts the signal path and should therefore be detected, might remain undetected. By carrying out the correlation analysis between the detected data that had previously been coded with a relatively short transmission code, and the longer mismatched code and by evaluating the correlation result, interference can be detected despite short code lengths, because the shortcomings of the short transmission code are mitigated by the longer mismatched code.

The evaluation unit is preferably configured to generate a warning signal if the cross-correlation between the first detection signal and the first mismatched filter code is below a given (first) threshold. Alternatively or additionally, the evaluation unit may be configured to generate a confirmation signal if the cross-correlation between the first detection signal and the first mismatched filter code exceeds a given (second) threshold. The first and second threshold may be identical.

The first code (first transmission code) is preferably a binary or bi-polar code. The first mismatched code is preferably a non-binary code, for instance a decimal code.

The surveillance channels preferably differ in the codes that they use. For instance, one surveillance channel may use one code (e.g. one Gold code), whereas another surveillance channel (preferably the adjacent surveillance channels) may use another code (e.g. another Gold code).

The evaluation unit is preferably configured to generate a warning signal if the cross-correlation between the second detection signal and the second mismatched filter code is below a given (first) threshold. Alternatively or additionally, the evaluation unit may be configured to generate a confirmation signal if the cross-correlation between the second detection signal and the second mismatched filter code exceeds a given (second) threshold. The first and second threshold may be identical.

The first mismatched filter code and the second mismatched filter code are preferably orthogonal.

The first code and the second code are preferably orthogonal.

The first code and the second mismatched filter code are preferably orthogonal.

The second code and the first mismatched filter code are preferably orthogonal.

H1 and H2 are preferably defined as

$$H1 = \begin{bmatrix} Hx \\ Hy \end{bmatrix} = \begin{bmatrix} x1 & x2 & ... & xn & ... & 0 \\ x2 & x3 & ... & 0 & ... & 0 \\ ... & ... & ... & ... & ... & 0 \\ xn & 0 & ... & 0 & ... & 0 \\ y1 & y2 & ... & yn & ... & 0 \\ y2 & y3 & ... & 0 & ... & 0 \\ ... & ... & ... & ... & ... & 0 \\ yn & 0 & ... & 0 & ... & 0 \end{bmatrix}$$

$$H2 = \begin{bmatrix} Hy \\ Hx \end{bmatrix} = \begin{bmatrix} y1 & y2 & ... & yn & ... & 0 \\ y2 & y3 & ... & 0 & ... & 0 \\ ... & ... & ... & ... & ... & 0 \\ yn & 0 & ... & 0 & ... & 0 \\ x1 & x2 & ... & xn & ... & 0 \\ x2 & x3 & ... & 0 & ... & 0 \\ ... & ... & ... & ... & ... & 0 \\ xn & 0 & ... & 0 & ... & 0 \end{bmatrix}$$

x1-xn define the first code x according to $x := [x1, x2,..., xn]$. y1-yn define the second code y according to $y := [y1, y2,..., yn]$. Matrices H1 and H2 each comprise M columns. M corresponds to the length of the first and second mismatched filter code. M is larger than the number N of vector elements of the first and second code.

The sensor may comprise a first group of surveillance channels and a second group of surveillance channels. The first group of surveillance channels is operated based on said first code having the first code length and said first mismatched code that has a code length larger than the first code length. The second group of surveillance channels is operated based on said second code having the second code length and said second mismatched code that has a code length larger than the second code length. The surveillance channels are preferably arranged such that neighboring surveillance channels of the same group are separated by a single surveillance channel of the other group.

The first group of surveillance channels is preferably formed by radiation emitters identical or similar to said first radiation emitter (as described above) and by detectors identical or similar to said first detector (as described above). The second group of surveillance channels is preferably formed by radiation emitters identical or similar to said second radiation emitter (as described above) and by detectors identical or similar to said second detector (as described above).

The sensor may comprise one or more additional surveillance channels that are operated based on an additional code that differs from the first and second code, and a corresponding additional mismatched code that differs from the first and second mismatched code. Each additional code and each additional mismatched code preferably fulfil the same requirements as the first and second code and the first and second mismatched code, as discussed above, with respect to one another and with respect to the first and second code and the first and second mismatched code.

The sensor is preferably a light curtain sensor.

The surveillance channel or channels are preferably free-beam surveillance channels. The streams of data are preferably transmitted via free-space beam propagation.

A further embodiment of the invention relates to a method according to claim 6.

All features as described above in connection with the sensor or light curtain device can also be included in said method of fabricating a sensor. In other words, all features listed in the description and in the dependent claims that refer to the sensor, may also be considered as disclosed subject matter regarding the method.

Furthermore, all features as described above in connection with the method can also be included in said sensor or light curtain device. In other words, all features listed in the description and in the dependent claims that refer to the method, may also be considered as disclosed subject matter regarding the sensor or light curtain device.

Brief description of the drawings

In order that the manner, in which the above-recited and other advantages of the invention are obtained, will be readily understood, a more particular description of the invention briefly described above will be rendered by reference to specific embodiments thereof, which are illustrated in the appended figures. Understanding that these figures depict only typical embodiments of the invention and are therefore not to be considered limiting of its scope, the invention will be described and explained with additional specificity and detail by the use of the accompanying drawings in which

Figure 1    illustrates an exemplary embodiment of a sensor according to the present invention,

Figure 2    shows an exemplary embodiment of a transmitter device that can be incorporated in the sensor of Figure 1,

Figure 3    shows an exemplary data stream that can be sent to a receiver device of the sensor of Figure 1,

Figure 4    shows an exemplary embodiment of a receiver device that can be incorporated in the sensor of Figure 1,

Figure 5    shows exemplary signals that may be received by the receiver device of Figure 4,

Figure 6    shows further embodiments of components suitable for a receiver device of the sensor of Figure 1,

Figure 7    depicts a second exemplary embodiment of a sensor according to the present invention,

Figure 8    visualizes an example of matched filtering,

Figure 9    visualizes an example of mismatched filtering,

Figure 10   visualizes two bi-polar 6-bit codes x and y shown here as an example,

Figure 11   visualizes auto- and cross-correlation of codes x and y, it can be seen that the autocorrelation function has a peak in the middle and the side-lobes are relatively low,

Figure 12   visualizes auto- and cross-correlation of codes x = [1, -1, -1, 1, -1, 1] and y = [1, 1, -1, -1, 1, 1], it can be seen that the auto-correlation function has a peak in the middle but the cross-correlation is high once the lag is +/-1 from the center,

Figure 13   visualizes mismatched code vectors $\hat{x}$ and $\hat{y}$ formed by solving the equation (9), it can be seen that the correlation function has lower sidelobes as compared to matched filtering, and

Figure 14   visualizes a cross correlation result of mismatched codes $\hat{x}$ and $\hat{y}$, the peaks are lower than the results for matched filtering scenarios.

Detailed description of the preferred embodiments

The preferred embodiments of the present invention will be best understood by reference to the drawings, wherein identical or comparable parts are designated by the same reference signs throughout.

It will be readily understood that the parameters of the embodiments of the present invention, as generally described herein, could vary in a wide range. Thus, the following more detailed description of exemplary embodiments of the present invention, is not intended to limit the scope of the invention but is merely representative of presently preferred embodiments of the invention.

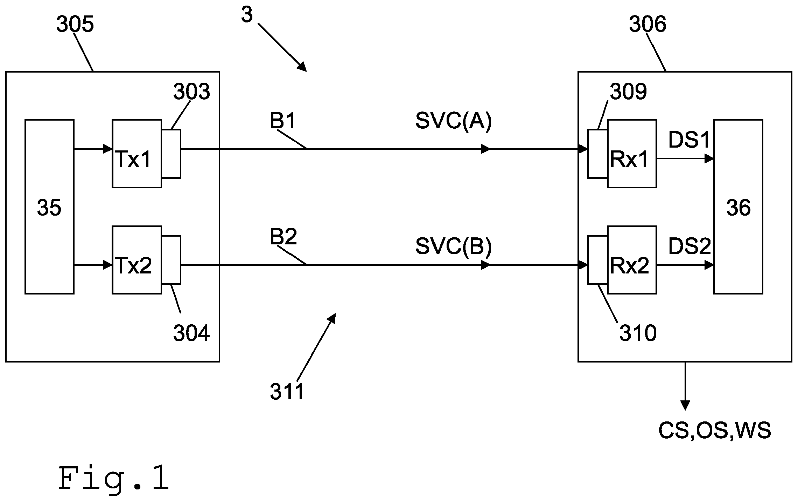

Figure 1 depicts a first exemplary embodiment of a sensor 3 according to the present invention. The sensor 3 of Figure 1 is an object detection sensor that provides two adjacent single free-beam surveillance channels SVC. As will be explained in detail further below, the sensor 3 is configured to generate a clearance signal CS if the free-beam surveillance channels SVC are uninterrupted and undisturbed. If one of the free-beam surveillance channels SVC is interrupted, an object detection signal OS is generated. If one of the free-beam surveillance channels SVC is uninterrupted, but disturbed a warning signal WS is generated.

The sensor 3 comprises a transmitter device 305 and a receiver device 306.

The transmitter device 305 comprises a first radiation emitter Tx1 and a second radiation emitter Tx2 which both may be controlled by an emitter control unit 35 of the transmitter device 305. The radiation generated by the radiation emitters may be visible light or invisible light (e. g. infrared or ultraviolet light) or any other electromagnetic radiation.

The emitter control unit 35 controls the first radiation emitter Tx1 such that the first radiation emitter Tx1 generates a first radiation beam B1 that conveys a first stream of data. The data are coded based on a first binary/bipolar (transmission) code having a first code length. The first code length can be six, for instance, as discussed further below in an exemplary fashion.

The emitter control unit 35 controls the second radiation emitter Tx2 such that the second radiation emitter Tx2 generates a second radiation beam B2 that conveys a second stream of data. The latter data are coded based on a second binary/bipolar (transmission) code having a second code length. The second code length can be six, for instance, as discussed further below in an exemplary fashion.

The first beam B1 and its allocated first stream of data as well as the second beam B2 and its allocated second stream of data are transmitted towards the receiver unit 306 via free-space beam propagation.

The receiver device 306 comprises a first detector Rx1 and a second detector Rx2.

The first radiation emitter Tx1 is individually assigned to the first detector Rx1 such that the first radiation emitter Tx1 and the first detector Rx1 form a first one of said two surveillance channels SVC.

The second radiation emitter Tx2 is individually assigned to the second detector Rx2 such that the second radiation emitter Tx2 and the second detector Rx2 form a second one of said two surveillance channels SVC.

An evaluation unit 36 of the receiver device 306 is configured to evaluate detection signals DS1 and DS2 of the detectors Rx1 and Rx2.

The evaluation unit 36 carries out a correlation analysis with respect to the first detection signal DS1 and the received first stream of data. The correlation analysis includes calculating the correlation between the first detection signal DS1 and a first mismatched code that has a code length larger than the first code length of the first code. The first mismatched code is preferably a decimal code.

The evaluation unit 36 generates a warning signal WS if the cross-correlation between the first detection signal DS1 and the first mismatched filter code is below a given threshold. The length of the first mismatched filter code can be twelve, for instance, as discussed further below in an exemplary fashion.

The evaluation unit 36 also carries out a correlation analysis with respect to the second detection signal DS2 and the received second stream of data. The correlation analysis includes calculating the correlation between the second detection signal DS2 and a second mismatched code that has a code length larger than the second code length of the second code. The evaluation unit 36 generates a warning signal WS if the cross-correlation between the second detection signal DS2 and the second mismatched filter code is below a given threshold. The length of the second mismatched filter code can be twelve, for instance, as discussed further below in an exemplary fashion. The first mismatched code is preferably a decimal code.

The evaluation unit 36 generates a clearance signal CS if the free-beam surveillance channels SVC are both uninterrupted and undisturbed. The surveillance channels SVC may be deemed uninterrupted if both detectors Rx1 and Rx2 receive radiation and generate detection signals that have a sufficient signal strength (e.g. minimal amplitude). The surveillance channels SVC may be deemed undisturbed if the detections signals DS1 and DS2 pass the cross-correlation tests mentioned above, i.e. if the cross-correlation between the detection signals and the assigned mismatched filter codes exceed said given threshold.

The evaluation unit 36 generates the object detection signal OS if one or both of the surveillance channels are interrupted. The surveillance channels may be deemed interrupted if the detectors Rx1 and Rx2 do not generate a sufficient detection signal, e. g. do not provide a detection signal having a required minimum amplitude.

When using multiple surveillance channels SVC in close proximity to one another, the adjacent surveillance channels preferably differ with respect to their codes and assigned mismatched codes. In the exemplary embodiment of Figure 1, the sensor 3 provides two different types of surveillance channels labeled A and B. Both types may have identical hardware but differ with respect to the codes assigned to them, with type A using one code x and type B using another code y.

As depicted in an exemplary fashion in Figure 1, the B-type detector 310 receives a signal from the assigned B-type radiation emitter 304. But due to close proximity, it is possible that it can also receive signals from the A-type radiation emitter 303.

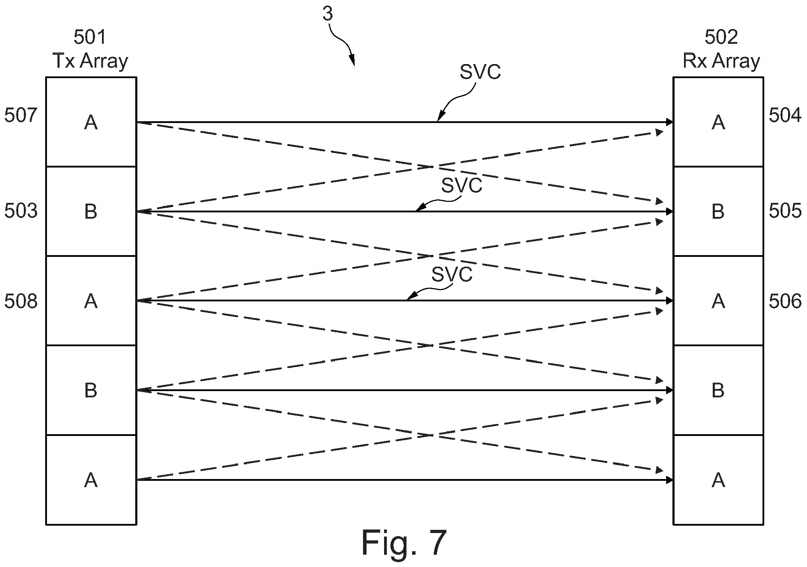

The same problem occurs if the sensor 3 comprises an emitter array 501 having a plurality of radiation emitters 503, 507 and 508, and a receiver array 502 having a plurality of radiation detectors 504, 505 and 506, as shown in Figure 7. For instance, the B-type second detector 505 will receive a signal from the assigned B-type radiation emitter 503. But due to close proximity, it is possible that it can also receive signals from the adjacent A-type radiation emitters 507 and 508. The interference from other B-type transmitter units can usually be ignored due to the distance.

In order to provide different codes , we can use Pseudo-Noise (PN) sequences, such as Gold codes, ML sequences, Kassami codes etc. One drawback to using these codes are that the code length, N, should be increased to achieve a reasonable autocorrelation and cross-correlation response. For a small N the sidelobes of the autocorrelation function are too high and as a result it will not be able to suppress interference adequately. For a larger N, the problem is more of processing power and bandwidth as we have to send/receive N chips/bits in a specific time, which based on the application, can be as low as 10s of microseconds. This can increase the cost of the sensor substantially. Therefore, we propose using mismatched (filter) codes. The length of the mismatched (filter) codes is larger than the length of the assigned codes which in turn allow using relatively short codes for transmission. Such mismatched (filter) codes will be explained hereinafter in an exemplary fashion.

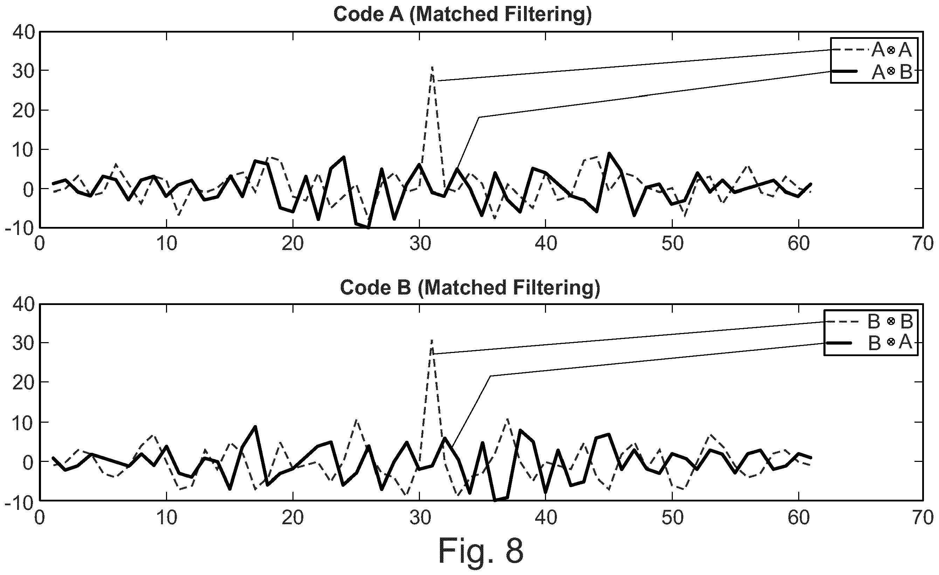

Figure 8 shows the correlation of two such orthogonal codes A and B. The symbol $A \otimes B$ represent cross-correlation (e. g. as described in the publication "Code inverse filtering for complete side-lobe removal in binary phase coded pulse compression systems" (R. C. Daniels and V. Gregers-Hansen, IEEE International Radar Conference, 2005.,

Arlington, VA, 2005, pp. 256-261, doi: 10.1109/RADAR.2005.1435830) given by the following equation:

$$A \otimes B := R(k) = \sum_{\xi=-\infty}^{\infty} A(\xi - k)B(\xi), \qquad (3)$$

where, $\xi, k \in \mathbb{Z}$.

To reduce interference, the following set of conditions need to be satisfied:

$$A \otimes B = 0, \quad k \in (-\infty, \infty),$$

$$A \otimes A = N, \quad k \in (0)$$

$$A \otimes A = 0, \quad k \notin (0)$$

$$B \otimes B = N, \quad k \in (0)$$

$$B \otimes B = 0, \quad k \notin (0)$$

To achieve better side-lobe performance of cross-correlation function for a small or reasonable N, we can use a mismatched filter code obtained through solving the following optimization problem.

$$\min_{\hat{x}} \| H \ \hat{x} - b \|_2 \qquad (4)$$

- H designates the convolution matrix containing the delayed version of x.

- b is the desired response. b consist of zeros (or a very small number represented by $\varepsilon$) at all delays except zero delay, hence ensuring that the autocorrelation function is close to ideal thumbtack function.

- $\hat{x}$ is the mismatched counterpart (the mismatched filter code) of x having length M > N.

- The length of b is always odd and for instance given by 2*N+1.

The convolution matrix H is defined as

$$H = \begin{bmatrix} x1 & x2 & \dots & xn & \dots & 0 \\ x2 & x3 & \dots & 0 & \dots & 0 \\ \dots & \dots & \dots & \dots & \dots & 0 \\ xn & 0 & \dots & 0 & \dots & 0 \end{bmatrix} \qquad (5)$$

wherein x1-xn define the first code x according to x:= [x1, x2, ..., xn] ,
wherein the convolution matrix H comprises M columns and
wherein M corresponds to the length of first mismatched filter code (M>N).

The solution to the problem is given by equation (4):

$$\hat{x} = H^{\mathrm{t}} b \qquad (6)$$

$H^t$ describes the Moore-Penrose inverse of the convolution matrix H.

For a two-type (A-type and B-type) sensor 3 as depicted in Figure 1 or a two-type grid system as depicted in Figure 7, we solve the following set of optimization problems simultaneously to obtain the mismatched pairs {x, $\hat{x}$} and {y, $\hat{y}$}:

$$\min_{\hat{x}} \|H_x \hat{x} - b1\|_2 \qquad (7)$$

$$\min_{\hat{y}} \|H_x \hat{y} - b2\|_2 \qquad (8)$$

$$\min_{\hat{y}} \|H_y \hat{y} - b1\|_2 \qquad (9)$$

The resultant vectors $\hat{x}$ and $\hat{y}$ will be orthogonal to y and x respectively and also orthogonal to each other.
We form Hx, Hy, H1, H2, b1 and b2 as follows:

```
b1 := [ε … 1 … ε], b2 := [ε … ε …. ε]
```

The length of b1 and b2 is given by 2*N+1.

$$Hx = \begin{bmatrix} x1 & x2 & … & xn & … & 0 \\ x2 & x3 & … & 0 & … & 0 \\ … & … & … & … & … & 0 \\ xn & 0 & … & 0 & … & 0 \end{bmatrix}$$

(in accordance with equation (5)

$$Hy = \begin{bmatrix} y1 & y2 & … & yn & … & 0 \\ y2 & y3 & … & 0 & … & 0 \\ … & … & … & … & … & 0 \\ yn & 0 & … & 0 & … & 0 \end{bmatrix}$$

(in accordance with equation (5)
To solve equation (9), we form two matrices, H1 and H2 in the following manner:

$$H1 = \begin{bmatrix} Hx \\ Hy \end{bmatrix} = \begin{bmatrix} x1 & x2 & … & xn & … & 0 \\ x2 & x3 & … & 0 & … & 0 \\ … & … & … & … & … & 0 \\ xn & 0 & … & 0 & … & 0 \\ y1 & y2 & … & yn & … & 0 \\ y2 & y3 & … & 0 & … & 0 \\ … & … & … & … & … & 0 \\ yn & 0 & … & 0 & … & 0 \end{bmatrix}$$

$$H2 = \begin{bmatrix} Hy \\ Hx \end{bmatrix} = \begin{bmatrix} y1 & y2 & ... & yn & ... & 0 \\ y2 & y3 & ... & 0 & ... & 0 \\ ... & ... & ... & ... & ... & 0 \\ yn & 0 & ... & 0 & ... & 0 \\ x1 & x2 & ... & xn & ... & 0 \\ x2 & x3 & ... & 0 & ... & 0 \\ ... & ... & ... & ... & ... & 0 \\ xn & 0 & ... & 0 & ... & 0 \end{bmatrix} \qquad (10)$$

Then, we solve the following problems:

$$\min_{\hat{x}} \lVert H1\hat{x} - b \rVert_2 \qquad (11)$$

and

$$\min_{\hat{y}} \lVert H2\hat{y} - b \rVert_2 \qquad (12)$$

$$\mathrm{b} := [e, e, ...,1, e, ... e] \, ,$$

ε is a small threshold value (ε << 0,1), and the length of b is given by 2*N+1.

The value 1 is placed at the center of the correlation function as we want to maximize the response, while the small parameter, ε, will ensure the side-lobes of correlation and cross-correlation are very small. The solution is given by the following equations:

$$\hat{x} = H_1^t b$$

$$\hat{y} = H_2^t b \qquad (13)$$

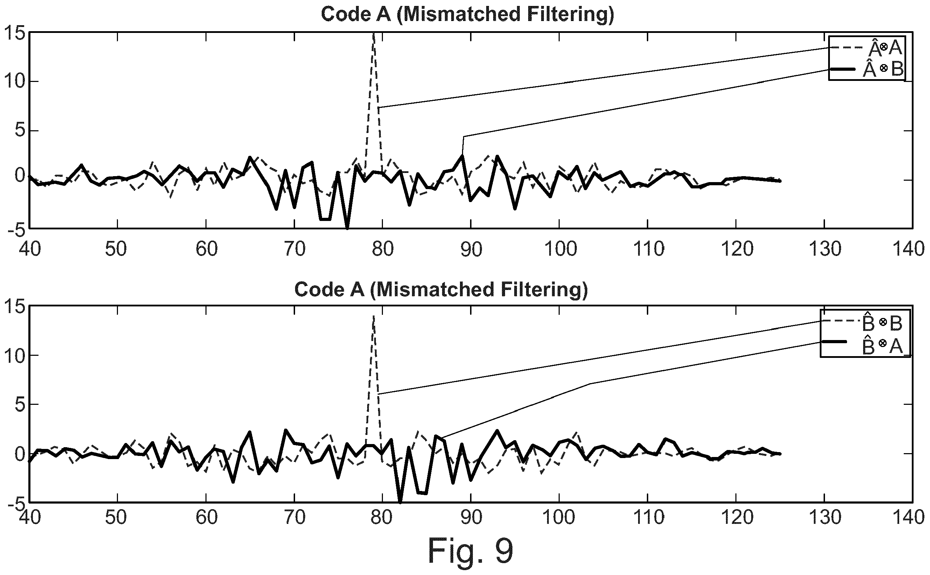

The results are shown in Figure 9. There is some loss of Signal-to-Noise-Ratio (SNR), but the peak to side-lobe ratio will ensure that there is minimal interference from the cross code. The above described concept can be easily extended to more than two sensors. Although it will be required for a large number of codes to increase N as well.

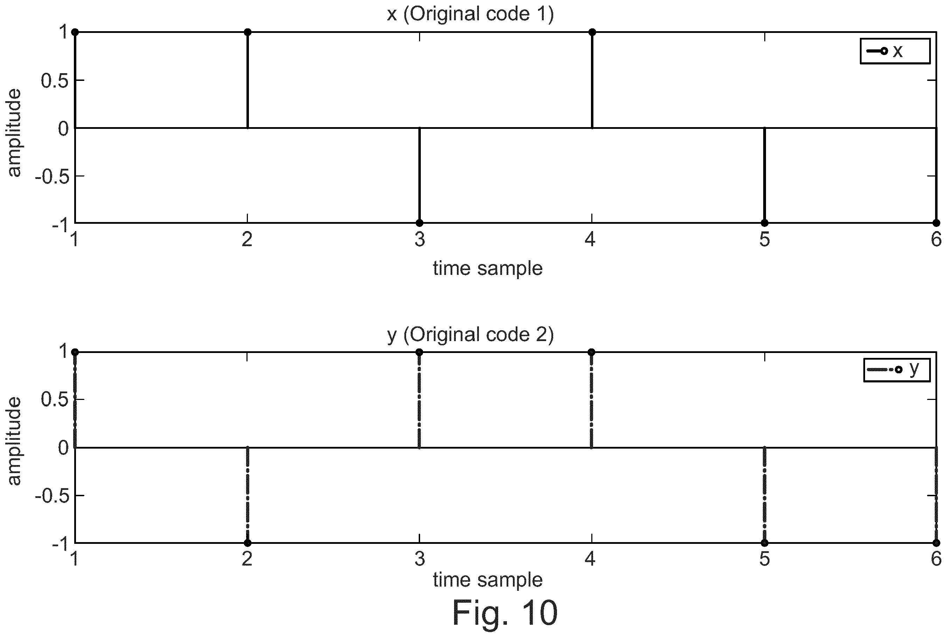

Hereinafter, an example of mismatched filtering will be explained in further detail with reference to Figures 10-14. We present two simple 6-bit codes (and mismatched filter codes having a length of 12), to make our approach clear. Figure 10 shows two bi-polar 6-bit codes x and y as an example:

$$\mathrm{x} = [1, \ 1, \ -1, \ 1, \ -1, \ -1]$$

for A-type beams and

$$\mathrm{y} = [1, \ -1, \ 1, \ 1, \ -1, \ -1]$$

for B-type beams as depicted in Figures 1 and 7.

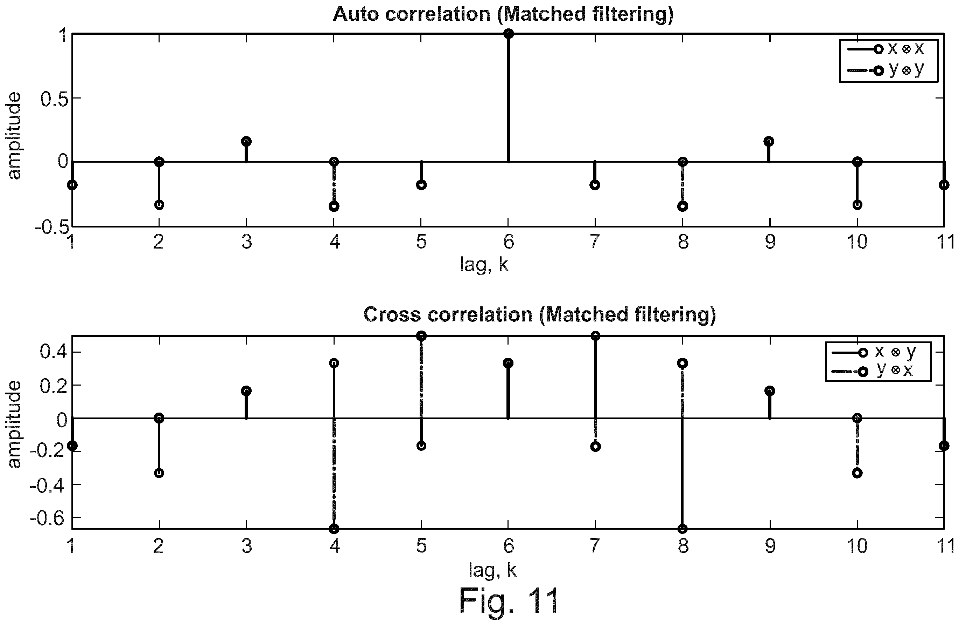

As shown in Figure 11, we can see that both auto-correlation functions (x⊗x and y⊗y) have a central peak and some-what low side-lobes. Since the receivers and transmitters do not need to be physically connected and may therefore be un-synchronized, the detection of the presence of the signal is done by comparing the correlation output to a threshold. So if the side-lobes are high, due to additive noise, it can be mistaken for signal presence, when none is present, or at least not at that sample. This is true for cross-correlation, since the sensor type A can detect signals from neighbouring sensor type B, we have to ensure that the cross-correlation is minimal.

Figure 11 shows an auto- and cross-correlation of binary codes x and y. It can be seen that the auto-correlation function has a peak in the middle and the side-lobes are relatively low.

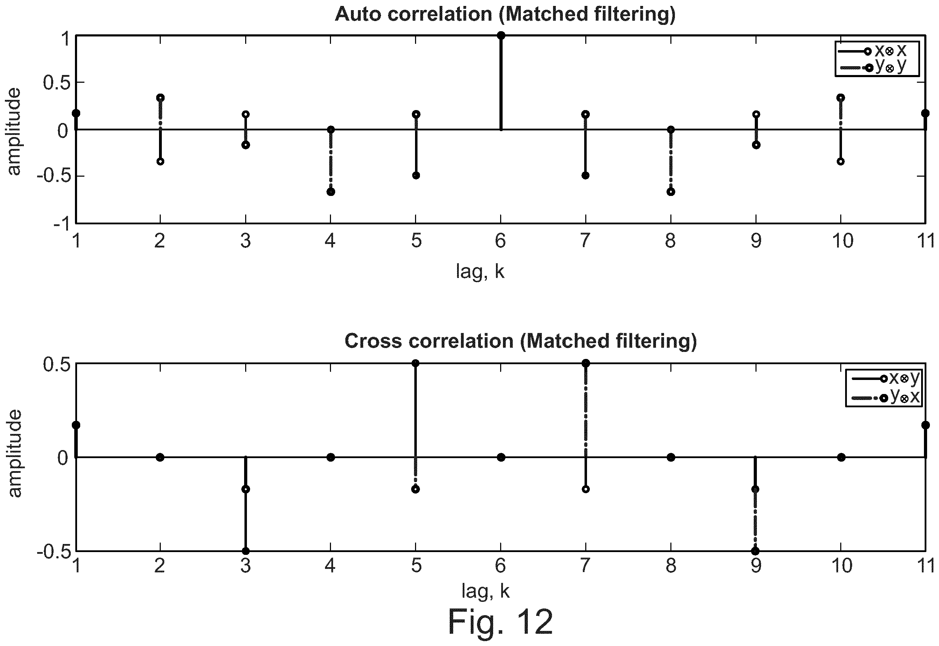

Figure 12 depicts another example code. Figure 12 shows the auto- and cross-correlation of codes x = [1, -1, -1, 1, -1, 1] and y = [1, 1, -1, -1, 1, 1]. It can be seen that the auto-correlation function has a peak in the middle but the cross-correlation is high once the lag is +/-1 from the center. This can be problematic in case the sensors are un-synchronized.

Furthermore, we can see in Figure 12 that the cross-correlation at lag = 6 is zero. So these two codes are orthogonal, when sampled correctly. But in case of timing errors, and lack or synchronization, the cross-correlation can be 50% of the peak, which for low Signal-to-Noise Ratio (SNR) cases will result in cross-talk between sensor A and B. Apart from a good autocorrelation response of the two codes, it is important to design the codes such that the cross-correlation is also minimum.

The problem posed in equation (9) tries to address this issue by simultaneously decreasing the side-lobes of the correlation function as well as reducing the cross-correlation. This will work well once N has a large value. For ease of understanding we have chosen N=6 for our example, although in practice a larger value of N should be used.

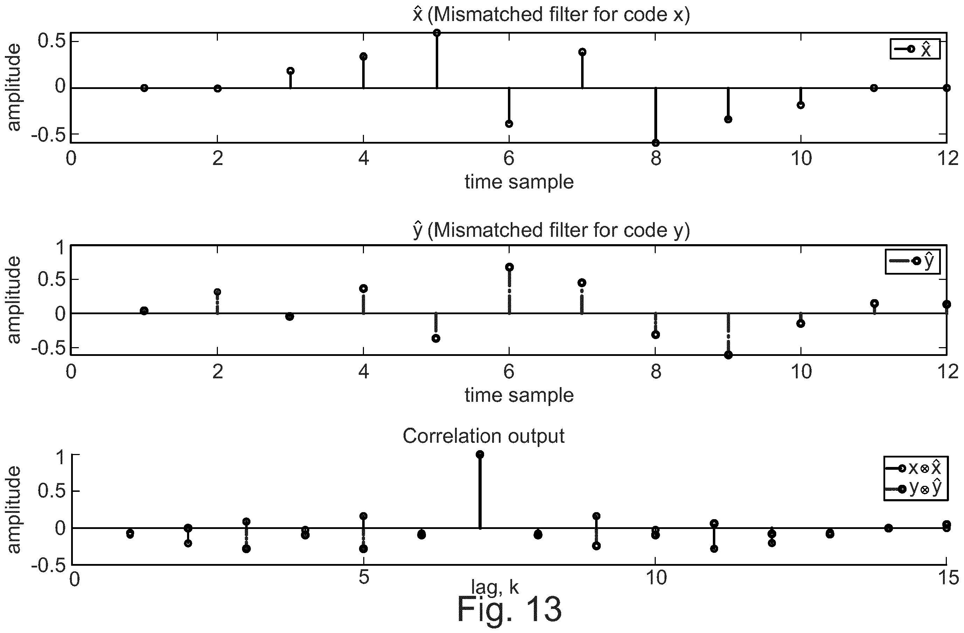

Figure 13 shows the mismatched filters ($\hat{x}$ and $\hat{y}$) obtained by solving equation (12) for codes x = [1, 1, -1, 1, -1, -1] and y = [1, -1, 1, 1, -1, -1]. We can see that the side-lobes have significantly reduced as a result of mismatched filter application. The filter values of the mismatched filter are decimal and may have values of e.g. [0.01, 0.3, 0.4, ...].

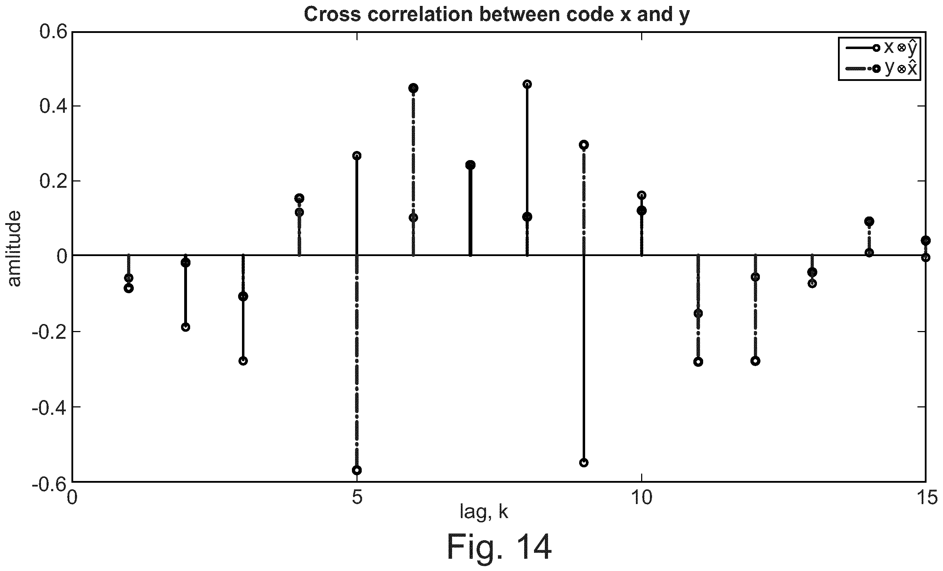

Figure 14 shows that the cross-correlation has also reduced as compared to the original code.

In summary, the embodiments explained above with reference to Figures 1 and 7-14 are directed to deriving a pair of non-binary orthogonal mismatched codes $\hat{x}$ and y, which have a given length M (e.g. M=12), from a given pair of binary orthogonal codes x and y that have a shorter length N (N<M).

Again referring to Figures 1 and 7, the first stream of data (type A coded data) and the second stream of data (type B coded data) may be inverse. In this context, "inverse" means that the channels convey logically opposite information. For instance, when the first channel conveys the information "ACTIVE", the second channel conveys the information "INACTIVE".

An information can be transmitted via a single bit. Alternatively, the information and the opposite (inverse) information can be transmitted via pre-defined sequences of bits that differ from one another.

The evaluation unit 36 of Figure 1 may furthermore generate the warning signal WS if the detection signal DS1 of the first detector Rx1 is not inverse or not sufficiently inverse - according to a predefined deviation limit - with respect to the detection signal DS2 of the second detector Rx2. The pre-defined deviation limit may for instance require that the percentage of received pairs of information (e.g. bits) that are not inverse (relatively with respect to one another) must be lower than a given maximum limit (e.g. 1%). Alternatively or additionally, the predefined deviation limit may require that the percentage of received pairs of information (e.g. bits) that are inverse must exceed a given minimum limit (e.g. 99%).

Each of the surveillance channels SVC preferably defines a surveillance segment or light curtain segment of a light curtain generated by the sensor 3 during operation.

The surveillance channels may use radiation of the same wavelength. Alternatively, the surveillance channels may use different wavelengths. Preferably, adjacent surveillance channels use different wavelengths.

In the exemplary embodiment of Figure 1 and 7, the radiation beams B1 and B2 emitted by the transmitter device 305 travel through a medium 311, where undesired interference may be added in terms of ambient light as well as interference of other devices operating nearby.

In order to cope with such interference, the transmitter device 305 may comprise polarization filters 303 and 304 that are placed at the output ports of the radiation emitters Tx1 and Tx2. The polarization filters 303 and 304 are preferably oriented in such a way that the first beam B1 only comprises light that is polarized in horizontal direction (H-polarization) and the second beam B2 only comprises light that is polarized in vertical direction (V-polarization). Correspondingly, the receiver device 306 comprises polarization filters 309 and 310 that are placed at the input ports of the detectors Rx1 and Rx2. The polarization filters 309 and 310 are preferably oriented in such a way that the first detector Rx1 only receives light that is polarized in horizontal direction (H-polarization) and the second detector Rx2 only receives light that is polarized in vertical direction (V-polarization). Such orientations of the polarization filters 303, 304, 309 and 310 allow conveying polar signals (+1/-1) through an optical system which per se is not capable of conveying negative polarities (we can only send 0,+1 through optical systems).

Additionally or alternatively, the streams of data may be sent through frequency shift keying, whereby the radiation beams B1 and B2 emitted by the radiation emitters Tx1 and Tx2 have vastly different frequencies, e.g. emit red and infrared light. Appropriate optical filters may be applied to the detectors Rx1 and Rx2 to suppress cross talk between adjacent channels.

Time domain multiplexing may also (or alternatively) be used to reduce the influence of ambient light and/or interference.

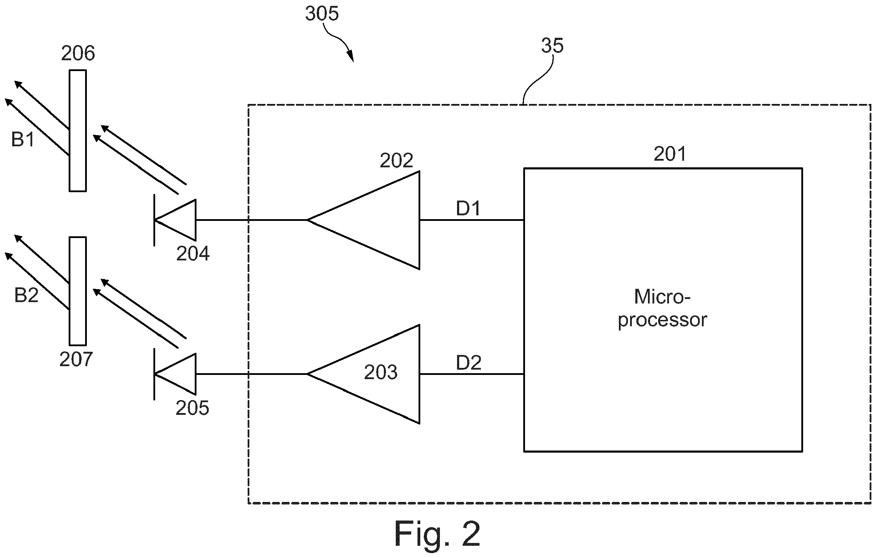

Figure 2 shows an exemplary embodiment of a transmitter device 305 that can be incorporated in the sensor 3 of Figure 1. The transmitter device 305 comprises a microprocessor 201 that may be used to generate two data streams D1 and D2, in such a way that only one data stream has a "1" or "ON" at a time (and the other has a "0" or "OFF" at the same time). The two digital data streams are passed through amplifiers 202 and 203 so that we have enough power for light emitting diodes (LEDs), as shown by 204 and 205, to illuminate an area of interest. 206 represents a horizontal polarizing filter, while 207 represents a vertical polarization filter. The main idea is that the data stream D1, converted to light signal will have horizontal polarization while the other data stream D2 will have vertical polarization.

In Figure 2, the microprocessor 201 and the amplifiers 202 and 203 form the emitter control unit 35 of Figure 1, and the diodes 204 and 205 form the radiation emitters Tx1 and Tx2 of Figure 1.

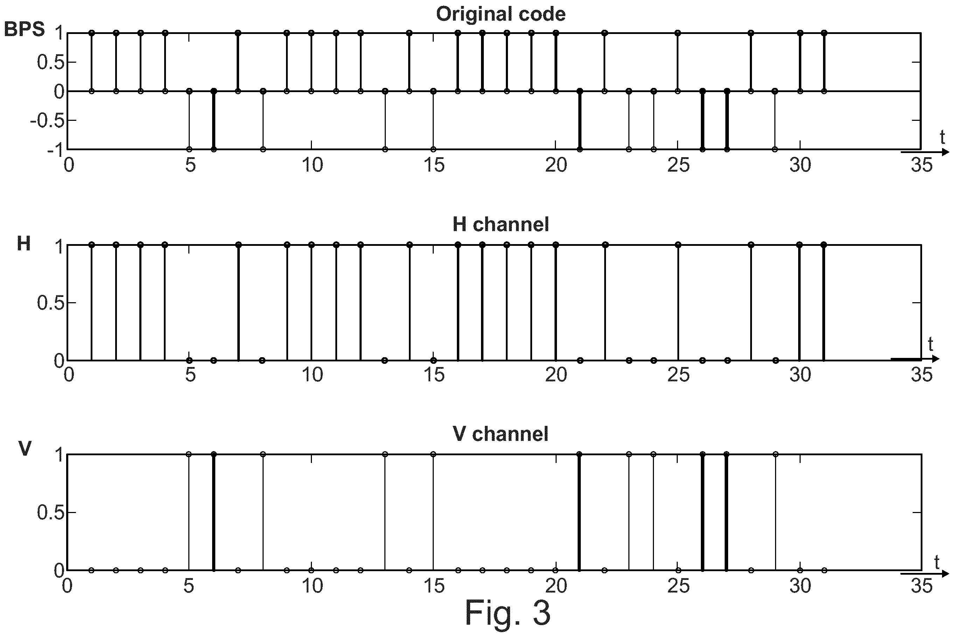

Figure 3 shows a potential data stream that can be sent over to the receiver device 306, versus time t. As shown in Figure 3, a bipolar signal BPS is converted to two unipolar signals, labeled H and V. These two unipolar signals H and V form the data signals (streams) D1 and D2, shown in Figure 2. The unipolar signal H may be optically transmitted via the horizontally polarized beam B1 in Figure 1, and the unipolar signal V may be optically transmitted via the vertically polarized beam B2 in Figure 1.

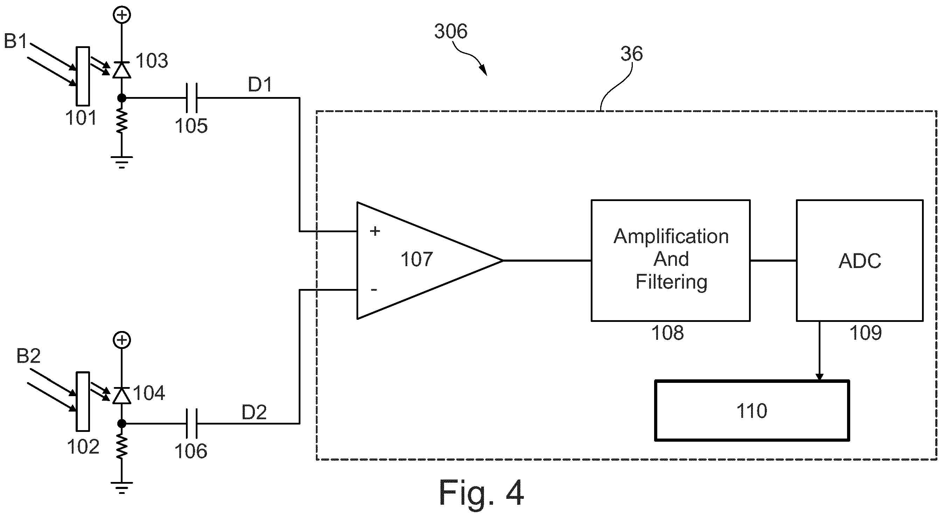

Figure 4 shows an exemplary embodiment of a receiver device 306 that can be incorporated in the sensor 3 of Figure 1. The received radiation beams B1 and B2 are split into horizontal and vertical polarized components, by help of a horizontal polarizing filter 101 and a vertical polarizing filter 102. The focused light (lens not shown for simplicity) then falls on to a photodiode 103, passing through polarization filter 101, to generate a data signal (stream) D1. In a similar way, we get a data signal (stream) D2, by passing the light through a vertical polarization filter 102, subsequently falling on to a photo-diode 104.

In Figure 4, a differential amplifier 107, an amplification and filtering block 108, an analog to digital converter 109 and a microprocessor 110 form the evaluation unit 36 of Figure 1. The diodes 103 and 104 form the radiation detectors Rx1 and Rx2 of Figure 1.

Using an additive model for ambient noise $\eta a$ and adding in the contribution of the device noise $\eta t$, we can write the received signals $yi$ in the following manner:

$$yi = \alpha xi + 0.5\eta a + \eta ti \text{ for } i = 1, 2 \quad (1)$$

Here we assume that the ambient light is not polarized, which is a reasonable assumption for most of the ambient light sources. For polarized light, the equation can be modified as follows:

$$yi = \alpha xi + \beta i\eta a + \eta ti \text{ for } i = 1, 2 \quad (2)$$

where,

$$\beta 1 = 1 - \beta 2, \quad \beta 2 \in (0, 1).$$

The worst case scenario will happen when the ambient light is 100% polarized, then our circuit (sensor 3) will not provide any benefit as compared to any other circuit (sensor) which is not utilizing the methods explained above. Any value of $\beta 2$, apart for the extremities of 0 and 1, will offer some advantage in terms of ambient light cancellation effects of our sensor 3, with the best results achieved when the ambient light is completely unpolarized ($\beta 2 = 0.5$). These arguments also stand true for other interfering sensors as the nature of the two interferences is very similar. The main difference however is the pulsing behavior of the interference as compared to the ambient light, which is incessant and slowly varying.

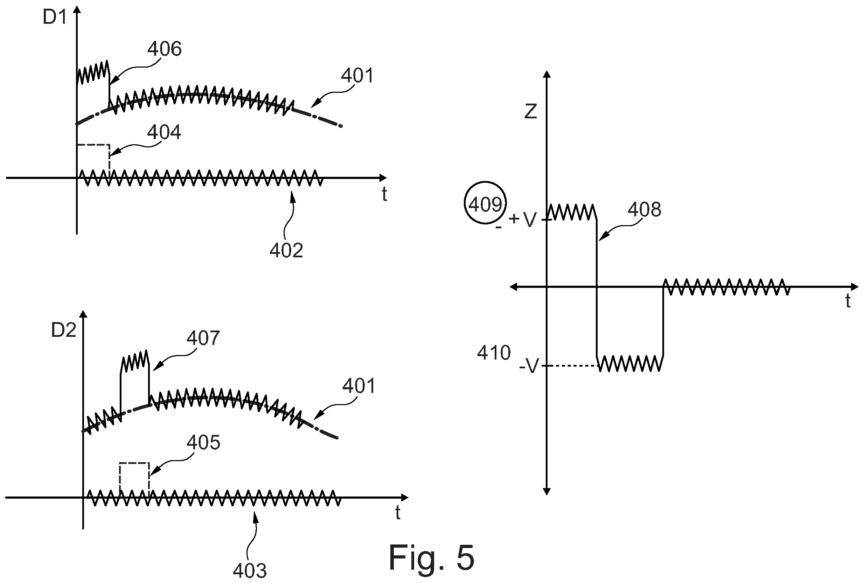

The received data streams D1 and D2 are shown in Figure 5 for one example scenario where we send "1 0 0 0..." on H channel and "0 1 0 0..." on V-channel. There is a phase offset of one period between the signal of the two channels. 401 represents ambient light, with $\beta 2 \approx 0.5$ in above equation (2).

The thermal noise for each receiver 402 and 403 will be different but with comparable power, given by $\sigma^2 ti$.

406 and 407 represent the combined signals, given by D1 and D2 respectively. The output of the amplifier 107 is given by

$$z = D1 - D2$$

and shown as 408 for our specific example. The received voltage levels +V (409) and -V (410), in practice will be too small and will need to be amplified and passed through a high pass filter to reduce the thermal noise. This is achieved by the amplification and filtering block 108. In the end, the signal is sampled through analog to digital converter 109.

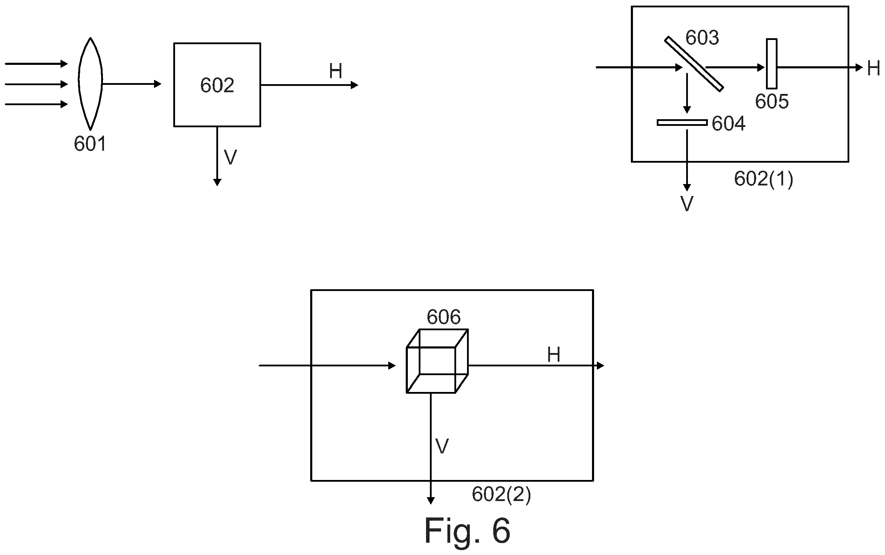

In one realization, as shown in Figure 6, the receiver device 306 of Figures 1 and 4 may have a lens 601 that focuses the incident light on a beam-splitter 602 and the output H and V channels are processed as depicted in Figure 6. A beam-splitter mechanism can be realized using a partial mirror 603, a horizontal polarization filter 605 and a vertical polarization filter 604 as depicted by 602(1). It can also be realized through a polarizing cube beam-splitter 606, as shown in 602 (2) .

The various embodiments and aspects of embodiments of the invention disclosed herein are to be understood not only in the order and context specifically described in this specification, but to include any order and any combination thereof. Whenever the context requires, all words used in the singular number shall be deemed to include the plural and vice versa. Whenever the context requires, all options that are listed with the word "and" shall be deemed to include the word "or" and vice versa, and any combination thereof.

In the drawings and specification, there have been disclosed a plurality of embodiments of the present invention. The applicant would like to emphasize that each feature of each embodiment may be combined with or added to any other of the embodiments in order to modify the respective embodiment and create additional embodiments. These additional embodiments form a part of the present disclosure.

## Claims

1.  Sensor (3) having a first radiation emitter (Tx1) and an individually assigned first detector (Rx1), and an evaluation unit (36),

    wherein the first radiation emitter (Tx1) and the individually assigned first detector (Rx1) form a first surveillance channel (SVC) configured to convey data that are coded based on a first code having a first code length, and wherein the evaluation unit (36) is configured to evaluate the first detection signal (DS1), and wherein the evaluation of the first detection signal (DS1) includes calculating the correlation between the first detection signal (DS1) and a first mismatched filter code that has a code length larger than the first code length, **characterized in that**
    the sensor comprises a second radiation emitter (Tx2) and an individually assigned second detector (Rx2), wherein the second radiation emitter (Tx2) and the individually assigned second detector (Rx2) form a second surveillance channel (SVC) configured to convey data that are coded based on a second code having a second code length,
    wherein the second code has the same code length as the first code,
    wherein the evaluation unit (36) of the sensor is configured to evaluate the second detection signal (DS2) based on a correlation analysis,
    wherein the correlation analysis of the second detection signal (DS2) includes calculating the correlation between the second detection signal (DS2) and a second mismatched filter code that has the same code length as the first mismatched filter code,
    wherein the first and second mismatched filter code fulfil the following conditions

$$\min_{\hat{x}} \|H1\hat{x} - b\|_2$$

$$\min_{\hat{y}} \|H2\hat{y} - b\|_2$$

$$\hat{x} = H_1^t b$$

$$\hat{y} = H_2^t b$$

wherein H1 and H2 are convolution matrices each containing the first code x and the second code y, b is a desired response, $\hat{x}$ and $\hat{y}$ are the first and second mismatched filter code, respectively, $H_1^t$ describes the Moore-Penrose inverse of the convolution matrix H1, and $H_2^t$ describes the Moore-Penrose inverse of the convolution matrix H2,
wherein the desired response b is defined by the following vector

$$b := [e, e, \ldots, 1, e, \ldots e]$$

and
wherein e is a small given number in the range between 0 and 0.1.

2. Sensor of claim 1,

   wherein the first mismatched filter code and the second mismatched filter code are orthogonal,
   wherein the first code and the second code are orthogonal,
   wherein the first code and the second mismatched filter code are orthogonal, and
   wherein the second code and the first mismatched filter code are orthogonal.

3. Sensor of any of the preceding claims, wherein H1 and H2 are defined as

$$H1 = \begin{bmatrix} Hx \\ Hy \end{bmatrix} = \begin{bmatrix} x1 & x2 & \ldots & xn & \ldots & 0 \\ x2 & x3 & \ldots & 0 & \ldots & 0 \\ \ldots & \ldots & \ldots & \ldots & \ldots & 0 \\ xn & 0 & \ldots & 0 & \ldots & 0 \\ y1 & y2 & \ldots & yn & \ldots & 0 \\ y2 & y3 & \ldots & 0 & \ldots & 0 \\ \ldots & \ldots & \ldots & \ldots & \ldots & 0 \\ yn & 0 & \ldots & 0 & \ldots & 0 \end{bmatrix}$$

$$H2 = \begin{bmatrix} Hy \\ Hx \end{bmatrix} = \begin{bmatrix} y1 & y2 & \ldots & yn & \ldots & 0 \\ y2 & y3 & \ldots & 0 & \ldots & 0 \\ \ldots & \ldots & \ldots & \ldots & \ldots & 0 \\ yn & 0 & \ldots & 0 & \ldots & 0 \\ x1 & x2 & \ldots & xn & \ldots & 0 \\ x2 & x3 & \ldots & 0 & \ldots & 0 \\ \ldots & \ldots & \ldots & \ldots & \ldots & 0 \\ xn & 0 & \ldots & 0 & \ldots & 0 \end{bmatrix}$$

   - wherein x1-xn define the first code x according to x:= [*x1, x2, ... , xn*] ,
   - wherein y1-yn define the second code y according to y:= [*y1,y2, ...,yn*] ,
   - wherein matrices H1 and H2 comprise M columns,
   - wherein M corresponds to the length of the first and second mismatched filter code, and
   - wherein M is larger than the number N of vector elements of the first and second code.

4. Sensor of any of the preceding claims,
   wherein the evaluation unit (36) is configured to generate a warning signal if the cross-correlation between the first detection signal (DS1) and the first mismatched filter code is below a given threshold, and/or configured to generate a confirmation signal if the cross-correlation between the first detection signal (DS1) and the first mismatched filter code exceeds a given threshold.

5. Sensor of any of the preceding claims,

   wherein the sensor comprises one or more additional surveillance channels (SVC) that are operated based on an additional code and a corresponding additional mismatched code,
   wherein each additional code and each additional mismatched code fulfil the same requirements as the first and second code and the first and second mismatched filter code, with respect to one another and with respect to the first and second code and the first and second mismatched filter code.

6. Method of fabricating a sensor according to any of the preceding claims, the method comprising the steps of

providing a first radiation emitter (Tx1) and assigning a first detector (Rx1), the first radiation emitter (Tx1) and the first detector (Rx1) forming a first surveillance channel (SVC),
defining a first code based on which data are conveyed by the first surveillance channel (SVC) wherein the first code has a first code length,
calculating a first mismatched filter code having a code length larger than the first code length, and
providing an evaluation unit (36) and configuring the evaluation unit (36) to evaluate the first detection signal (DS1), wherein the evaluation includes calculating the correlation between the first detection signal (DS1) and the first mismatched filter code,

- providing a second radiation emitter (Tx2) and assigning a second detector (Rx2), the second radiation emitter (Tx2) and the second detector (Rx2) forming a second surveillance channel (SVC),
- defining a second code based on which data are conveyed by the second surveillance channel (SVC),
- calculating a second mismatched filter code having a code length larger than the first code length, and
- configuring the evaluation unit (36) to evaluate the second detection signal (DS2) wherein the evaluation of the second detection signal (DS2) includes calculating the correlation between the second detection signal (DS2) and the second mismatched filter code,

wherein the first and second mismatched filter code fulfil the following conditions

$$\min_{\hat{x}}\|H1\hat{x} - b\|_2$$

$$\min_{\hat{y}}\|H2\hat{y} - b\|_2$$

$$\hat{x} = H_1^t b$$

$$\hat{y} = H_2^t b$$

wherein H1 and H2 are convolution matrices each containing the first code x and the second code y, b is a desired response, $\hat{x}$ and $\hat{y}$ are the first and second mismatched filter code, respectively, $H_1^t$ describes the Moore-Penrose inverse of the convolution matrix H1, and $H_2^t$ describes the Moore-Penrose inverse of the convolution matrix H2,
wherein the desired response b is defined by the following vector

$$b := [e, e, \dots, 1, e, \dots e]$$

and
wherein e is a small given number in the range between 0 and 0.1.

**Patentansprüche**

1. Sensor (3) mit einem ersten Strahlungsemitter (Txl) und einem individuell zugeordneten ersten Detektor (Rxl), und einer Auswerteeinheit (36),

wobei der erste Strahlungsemitter (Txl) und der individuell zugeordnete erste Detektor (Rxl) einen ersten Überwachungskanal (SVC) bilden, der zur Übertragung von Daten ausgebildet ist, die basierend auf einem ersten Code mit einer ersten Codelänge codiert sind, und
wobei die Auswerteeinheit (36) dazu ausgebildet ist, das erste Detektionssignal (DS1) auszuwerten, und
wobei die Auswertung des ersten Detektionssignals (DS1) Berechnen der Korrelation zwischen dem ersten Detektionssignal (DS1) und einem ersten fehlangepassten Filtercode aufweist, der eine Codelänge hat, die größer als die erste Codelänge ist,

**dadurch gekennzeichnet, dass**

der Sensor einen zweiten Strahlungsemitter (Tx2) und einen individuell zugeordneten zweiten Detektor (Rx2) umfasst,
wobei der zweite Strahlungsemitter (Tx2) und der individuell zugeordnete zweite Detektor (Rx2) einen zweiten Überwachungskanal (SVC) bilden, der zur Übertragung von Daten ausgebildet ist, die basierend auf einem zweiten Code mit einer zweiten Codelänge codiert sind,
wobei der zweite Code die gleiche Codelänge wie der erste Code hat,
wobei die Auswerteeinheit (36) des Sensors dazu ausgebildet ist, das zweite Detektionssignal (DS2) basierend auf einer Korrelationsanalyse auszuwerten,
wobei die Korrelationsanalyse des zweiten Detektionssignals (DS2) Berechnen der Korrelation zwischen dem zweiten Detektionssignal (DS2) und einem zweiten fehlangepassten Filtercode aufweist, der die gleiche Codelänge wie der erste fehlangepasste Filtercode hat,
wobei der erste und der zweite fehlangepasste Filtercode die folgenden Bedingungen erfüllen

$$\min_{\hat{x}} \; \| H1\hat{x} - b \|_2$$

$$\min_{\hat{y}} \; \| H2\hat{y} - b \|_2$$

$$\hat{x} = H_1^t b$$

$$\hat{y} = H_2^t b$$

wobei H1 und H2 Faltungsmatrizen sind, die jeweils den ersten Code x und den zweiten Code y enthalten, b eine gewünschte Antwort ist, $\hat{x}$ und y der erste bzw. zweite fehlangepasste Filtercode sind, $H_1^t$ die Moore-Penrose-Inverse der Faltungsmatrix H1 beschreibt, und $H_2^t$ die Moore-Penrose-Inverse der Faltungsmatrix H2 beschreibt,
wobei die gewünschte Antwort b durch den folgenden Vektor definiert ist

$$b := [e, e, \ldots, 1, e, \ldots e]$$

und
wobei e eine kleine gegebene Zahl im Bereich zwischen 0 und 0,1 ist.

2. Sensor nach Anspruch 1,

wobei der erste fehlangepasste Filtercode und der zweite fehlangepasste Filtercode orthogonal sind,
wobei der erste Code und der zweite Code orthogonal sind,
wobei der erste Code und der zweite fehlangepasste Filtercode des orthogonal sind, und
wobei der zweite Code und der erste fehlangepasste Filtercode orthogonal sind.

3. Sensor nach einem der vorhergehenden Ansprüche, wobei H1 und H2 definiert sind als

$$H1 = \begin{bmatrix} Hx \\ Hy \end{bmatrix} = \begin{bmatrix} x1 & x2 & ... & xn & ... & 0 \\ x2 & x3 & ... & 0 & ... & 0 \\ ... & ... & ... & ... & ... & 0 \\ xn & 0 & ... & 0 & ... & 0 \\ y1 & y2 & ... & yn & ... & 0 \\ y2 & y3 & ... & 0 & ... & 0 \\ ... & ... & ... & ... & ... & 0 \\ yn & 0 & ... & 0 & ... & 0 \end{bmatrix}$$

$$H2 = \begin{bmatrix} Hy \\ Hx \end{bmatrix} = \begin{bmatrix} y1 & y2 & ... & yn & ... & 0 \\ y2 & y3 & ... & 0 & ... & 0 \\ ... & ... & ... & ... & ... & 0 \\ yn & 0 & ... & 0 & ... & 0 \\ x1 & x2 & ... & xn & ... & 0 \\ x2 & x3 & ... & 0 & ... & 0 \\ ... & ... & ... & ... & ... & 0 \\ xn & 0 & ... & 0 & ... & 0 \end{bmatrix}$$

- wobei xl-xn den ersten Code x definieren gemäß x:= [x1, x2, ..., xn],
- wobei yl-yn den zweiten Code y definieren gemäß y:= [y1,y2,...,yn],
- wobei die Matrizen H1 und H2 M Spalten umfassen,
- wobei M der Länge des ersten und des zweiten fehlangepassten Filtercodes entspricht, und
- wobei M größer ist als die Anzahl N der Vektorelemente des ersten und des zweiten Codes.

4. Sensor nach einem der vorhergehenden Ansprüche, wobei die Auswerteeinheit (36) dazu ausgebildet ist, ein Warnsignal zu erzeugen, wenn die Kreuzkorrelation zwischen dem ersten Detektionssignal (DS1) und dem ersten fehlangepassten Filtercode unter einem vorgegebenen Schwellenwert liegt, und/oder dazu ausgebildet ist, ein Bestätigungssignal zu erzeugen, wenn die Kreuzkorrelation zwischen dem ersten Detektionssignal (DS1) und dem ersten fehlangepassten Filtercode einen bestimmten Schwellenwert überschreitet.

5. Sensor nach einem der vorhergehenden Ansprüche,

wobei der Sensor einen oder mehrere zusätzliche Überwachungskanäle (SVC) umfasst, die basierend auf einem zusätzlichen Code und einem entsprechenden zusätzlichen fehlangepassten Codes betrieben werden, wobei jeder zusätzliche Code und jeder zusätzliche fehlangepasste Code die gleichen Anforderungen wie der erste und der zweite Code und der erste und der zweite fehlangepasste Filtercode erfüllen, bezüglich zueinander und in Bezug auf den ersten und den zweiten Code und den ersten und den zweiten fehlangepassten Filtercode.

6. Verfahren zur Herstellung eines Sensors nach einem der vorhergehenden Ansprüche, wobei das Verfahren die Schritte umfasst:

Bereitstellen eines ersten Strahlungsemitters (Txl) und Zuordnen eines ersten Detektors (Rxl), wobei der erste Strahlungsemitter (Txl) und der erste Detektor (Rxl) einen ersten Überwachungskanal (SVC) bilden,
Definieren eines ersten Codes basierend auf dem Daten durch den ersten Überwachungskanal (SVC) übertragen werden, wobei der erste Code eine erste Codelänge hat,
Berechnen eines ersten fehlangepassten Filtercodes mit einer Codelänge, die größer als die erste Codelänge ist, und
Bereitstellen einer Auswerteeinheit (36) und Ausbilden der Auswerteeinheit (36), um das erste Detektionssignal (DS1) auszuwerten, wobei die Auswertung Berechnen der Korrelation zwischen dem ersten Detektionssignal (DS1) und dem ersten fehlangepassten Filtercode aufweist,

- Bereitstellen eines zweiten Strahlungsemitters (Tx2) und Zuordnen eines zweiten Detektors (Rx2), wobei der zweite Strahlungsemitter (Tx2) und der zweite Detektor (Rx2) einen zweiten Überwachungskanal (SVC) bilden,

- Definieren eines zweiten Codes basierend auf dem Daten durch den zweiten Überwachungskanal (SVC) übertragen werden,
- Berechnen eines zweiten fehlangepassten Filtercodes mit einer Codelänge, die größer als die erste Codelänge ist, und
- Ausbilden der Auswerteeinheit (36), um das zweite Detektionssignal (DS2) auszuwerten, wobei die Auswertung des zweiten Detektionssignals (DS2) Berechnen der Korrelation zwischen dem zweiten Detektionssignal (DS2) und dem zweiten fehlangepassten Filtercode aufweist,

wobei der erste und der zweite fehlangepasste Filtercode die folgenden Bedingungen erfüllen

$$\min_{\hat{x}} \parallel H1\hat{x} - b \parallel_2$$

$$\min_{\hat{y}} \parallel H2\hat{y} - b \parallel_2$$

$$\hat{x} = H_1^t b$$

$$\hat{y} = H_2^t b$$

wobei H1 und H2 Faltungsmatrizen sind, die jeweils den ersten Code x und den zweiten Code y enthalten, b eine gewünschte Antwort ist, $\hat{x}$ und y der erste bzw. zweite fehlangepasste Filtercode sind, $H_1^t$ die Moore-Penrose-Inverse der Faltungsmatrix H1 beschreibt, und $H_2^t$ die Moore-Penrose-Inverse der Faltungsmatrix H2 beschreibt,

wobei die gewünschte Antwort b durch den folgenden Vektor definiert ist

$$b := [e, e, \ldots, 1, e, \ldots e]$$

und
wobei e eine kleine gegebene Zahl im Bereich zwischen 0 und 0,1 ist.

## Revendications

1. Capteur (3) comprenant un premier émetteur de rayonnement (Tx1) et un premier détecteur (Rx1) affecté de manière individuelle, et une unité d'évaluation (36),

   dans lequel le premier émetteur de rayonnement (Tx1) et le premier détecteur affecté de manière individuelle (Rx1) forment un premier canal de surveillance (SVC) configuré pour transmettre des données codées sur la base d'un premier code ayant une première longueur de code, et
   dans lequel l'unité d'évaluation (36) est configurée pour évaluer le premier signal de détection (DS1), et
   dans lequel l'évaluation du premier signal de détection (DS1) comprend le calcul de la corrélation entre le premier signal de détection (DS1) et un premier code de filtre non adapté dont la longueur de code est supérieure à la première longueur de code, **caractérisé par le fait que** :

   le capteur comprend un deuxième émetteur de rayonnement (Tx2) et un deuxième détecteur (Rx2) affecté de manière individuelle,
   dans lequel le deuxième émetteur de rayonnement (Tx2) et le deuxième détecteur (Rx2) assigné de manière individuelle forment un deuxième canal de surveillance (SVC) configuré pour transmettre des données qui sont codées sur la base d'un deuxième code ayant une deuxième longueur de code,
   dans lequel le deuxième code a la même longueur de code que le premier code,
   dans lequel l'unité d'évaluation (36) du capteur est configurée pour évaluer le deuxième signal de détection (DS2) sur la base d'une analyse de corrélation,

dans lequel l'analyse de corrélation du deuxième signal de détection (DS2) comprend le calcul de la corrélation entre le deuxième signal de détection (DS2) et un deuxième code de filtre non adapté ayant la même longueur de code que le premier code de filtre non adapté,

dans lequel les premier et deuxième codes de filtrage non adaptés satisfont les conditions suivantes :

$$\min_{\hat{x}} \|H1\hat{x} - b\|_2$$

$$\min_{\hat{y}} \|H2\hat{y} - b\|_2$$

$$\hat{x} = H_1^t b$$

$$\hat{y} = H_2^t b$$

où H1 et H2 sont des matrices de convolution contenant chacune le premier code x et le deuxième code y, b est une réponse souhaitée, $\hat{x}$ et y sont respectivement les premier et deuxième codes de filtrage non adaptés, $H_1^t$ décrit l'inverse de Moore-Penrose de la matrice de convolution H1, et $H_2^t$ décrit l'inverse de Moore-Penrose de la matrice de convolution H2,

dans lequel la réponse souhaitée b est définie par le vecteur suivant :

$$b := [e, e, \dots, 1, e, \dots, e]$$

et

dans lequel e est un petit nombre donné compris entre 0 et 0,1.

2. Capteur selon la revendication 1,

dans lequel le premier code de filtre non adapté et le deuxième code de filtre non adapté sont orthogonaux,
dans lequel le premier code et le deuxième code sont orthogonaux,
dans lequel le premier code et le deuxième code de filtre non adapté sont orthogonaux, et
dans lequel le deuxième code et le premier code de filtre non adapté sont orthogonaux.

3. Capteur selon l'une quelconque des revendications précédentes,
dans lequel H1 et H2 sont définis comme suit :

$$H1 = \begin{bmatrix} Hx \\ Hy \end{bmatrix} = \begin{bmatrix} x1 & x2 & \dots & xn & \dots & 0 \\ x2 & x3 & \dots & 0 & \dots & 0 \\ \dots & \dots & \dots & \dots & \dots & 0 \\ xn & 0 & \dots & 0 & \dots & 0 \\ y1 & y2 & \dots & yn & \dots & 0 \\ y2 & y3 & \dots & 0 & \dots & 0 \\ \dots & \dots & \dots & & \dots & 0 \\ yn & 0 & \dots & 0 & \dots & 0 \end{bmatrix}$$

$$H2=\begin{bmatrix} Hy \\ Hx \end{bmatrix} = \begin{bmatrix} y1 & y2 & ... & yn & ... & 0 \\ y2 & y3 & ... & 0 & ... & 0 \\ ... & ... & ... & ... & ... & 0 \\ yn & 0 & ... & 0 & ... & 0 \\ x1 & x2 & ... & xn & ... & 0 \\ x2 & x3 & ... & 0 & ... & 0 \\ ... & ... & ... & ... & ... & 0 \\ xn & 0 & ... & 0 & ... & 0 \end{bmatrix}$$

- dans lequel x1-xn définit le premier code x selon x := [x1, x2, ... , xn],
- dans lequel y1-yn définit le deuxième code y selon y := [y1, y2, ... , yn],
- dans lequel les matrices H1 et H2 comprennent M colonnes,
- dans lequel M correspond à la longueur des premier et deuxième codes de filtre non adaptés, et
- dans lequel M est supérieur au nombre N d'éléments vectoriels des premier et deuxième codes.

4. Capteur selon l'une quelconque des revendications précédentes,
dans lequel l'unité d'évaluation (36) est configurée pour générer un signal d'avertissement si la corrélation croisée entre le premier signal de détection (DS1) et le premier code de filtre non adapté est inférieure à un seuil donné, et/ou configurée pour générer un signal de confirmation si la corrélation croisée entre le premier signal de détection (DS1) et le premier code de filtre non adapté dépasse un seuil donné.

5. Capteur selon l'une quelconque des revendications précédentes,

dans lequel le capteur comprend un ou plusieurs canaux de surveillance supplémentaires (SVC) qui sont exploités sur la base d'un code supplémentaire et d'un code non adapté supplémentaire correspondant, dans lequel chaque code supplémentaire et chaque code non adapté supplémentaire satisfont les mêmes conditions que les premier et deuxième codes et les premier et deuxième codes de filtre non adaptés, l'un par rapport à l'autre et par rapport aux premier et deuxième codes et aux premier et deuxième codes de filtre non adaptés.

6. Procédé de fabrication d'un capteur selon l'une quelconque des revendications précédentes, le procédé comprenant les étapes suivantes :

fournir un premier émetteur de rayonnement (Tx1) et affecter un premier détecteur (Rx1), le premier émetteur de rayonnement (Tx1) et le premier détecteur (Rx1) formant un premier canal de surveillance (SVC), définir un premier code sur la base duquel les données sont acheminées par le premier canal de surveillance (SVC), le premier code ayant une première longueur de code, calculer un premier code de filtre non adapté dont la longueur de code est supérieure à la première longueur de code, et fournir une unité d'évaluation (36) et configurer l'unité d'évaluation (36) pour évaluer le premier signal de détection (DS1), l'évaluation comprenant le calcul de la corrélation entre le premier signal de détection (DS1) et le premier code de filtre non adapté, fournir un deuxième émetteur de rayonnement (Tx2) et affecter un deuxième détecteur (Rx2), le deuxième émetteur de rayonnement (Tx2) et le deuxième détecteur (Rx2) formant un deuxième canal de surveillance (SVC), définir un deuxième code sur la base duquel les données sont transmises par le deuxième canal de surveillance (SVC) , calculer un deuxième code de filtre non adapté ayant une longueur de code supérieure à la première longueur de code, et configurer l'unité d'évaluation (36) pour évaluer le deuxième signal de détection (DS2), l'évaluation du deuxième signal de détection (DS2) comprenant le calcul de la corrélation entre le deuxième signal de détection (DS2) et le deuxième code de filtre non adapté, dans lequel les premier et deuxième codes de filtre non adaptés remplissent les conditions suivantes :

$$\min_{\hat{x}} \lVert H1\hat{x} - b \rVert_2$$

$$\min_{\hat{y}} \|H2\hat{y} - b\|_2$$

$$\hat{x} = H_1^t b$$

$$\hat{y} = H_2^t b$$

où H1 et H2 sont des matrices de convolution contenant chacune le premier code x et le deuxième code y, b est une réponse souhaitée, $\hat{x}$ et y sont respectivement les premier et deuxième codes de filtrage non adaptés, $H_1^t$ décrit l'inverse de Moore-Penrose de la matrice de convolution H1, et $H_2^t$ décrit l'inverse de Moore-Penrose de la matrice de convolution H2,
dans lequel la réponse souhaitée b est définie par le vecteur suivant :

$$b := [e, e, \dots, 1, e, \dots, e]$$

et
dans lequel e est un petit nombre donné compris entre 0 et 0,1.

Fig.1

Fig. 2

**Original code**

**H channel**

**V channel**

Fig. 3

Fig. 4

B1

103

101

105

D1

B2

104

102

106

D2

107

Amplification
And
Filtering

108

ADC

109

110

306

36

EP 4 166 994 B1

23

Fig. 5

Fig. 6

Fig. 7

Fig. 8

EP 4 166 994 B1

Code A (Mismatched Filtering)

$\hat{A} \otimes A$
$\hat{A} \otimes B$

Code A (Mismatched Filtering)

$\hat{B} \otimes B$
$\hat{B} \otimes A$

Fig. 9

Fig. 10

EP 4 166 994 B1

Fig. 11

## Auto correlation (Matched filtering)

## Cross correlation (Matched filtering)

Fig. 12

EP 4 166 994 B1

Fig. 13

EP 4 166 994 B1

Cross correlation between code x and y

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 203877712 U

**Non-patent literature cited in the description**

- **MICHAEL J LINDENFELD.** Mismatched Filters for Incoherent Pulse Compression in Laser Radar. *IEEE TRANSACTIONS ON AEROSPACE AND ELECTRONIC SYSTEMS, 20201116 IEEE SERVICE CENTER, PISCATAWAY, NJ, US,* ISSN 0018-9251

- **R. C. DANIELS ; V. GREGERS-HANSEN.** Code inverse filtering for complete side-lobe removal in binary phase coded pulse compression systems. *IEEE International Radar Conference, 2005., Arlington, VA,* 2005, 256-261